# FASCICULE DE BREVET EUROPEEN

(11) **EP 4 291 383 B1**
(45) Date de publication et mention de la délivrance du brevet: **29.01.2025**
(21) Numéro de dépôt: 22704767.7
(22) Date de dépôt: 10.02.2022
(51) Int. Cl.: B29C 64/118, B29C 64/20, B29C 64/209, B29C 64/321, B29C 64/393, B33Y 10/00, B33Y 30/00, B33Y 50/02

(54) **PROCÉDÉ DE FABRICATION ADDITIVE ET MACHINE DE FABRICATION ADDITIVE METTANT EN OEUVRE LEDIT PROCÉDÉ**
VERFAHREN ZUR ADDITIVEN FERTIGUNG UND MASCHINE ZUR ADDITIVEN FERTIGUNG, DIE DIESES VERFAHREN DURCHFÜHRT
METHOD OF ADDITIVE MANUFACTURING AND ADDITIVE MANUFACTURING MACHINE FOR CARRYING OUT SAID METHOD

(30) Priorité: 12.02.2021 FR 2101385
(43) Date de publication de la demande: 20.12.2023
(73) Titulaire: Lines Manufacturing (Société par Actions Simplifiée), 67140 Heiligenstein (FR)
(72) Inventeur: POURSILLIE, Emerik, 67000 Strasbourg (FR); PERNOUX, Niels, 67000 Strasbourg (FR); GARIP, Rauf, 67200 Strasbourg (FR)
(74) Mandataire: Cabinet Laurent & Charras
(86) Numéro de dépôt international: PCT/EP2022/053222
(87) Numéro de publication internationale: WO 2022/171729

(56) Documents cités:
- EP-A1- 3 626 439
- CN-A- 108 248 041
- CN-A- 108 357 091
- CN-A- 111 633 978
- CN-B- 110 253 882
- US-A1- 2020 338 822
- US-A1- 2021 078 257

## Description

### Domaine technique

La présente invention concerne un procédé et une machine de fabrication additive par dépôt de fil fondu en couches successives sur un support d'impression dans une chambre de fabrication pour fabriquer une pièce tridimensionnelle.

### Technique antérieure

Les avantages des technologies de fabrication additive, appelées aussi impression 3D, sont nombreux. Elles permettent de fabriquer des pièces d'une complexité élevée, inaccessible par des procédés de fabrication standards, tels que par enlèvement de matière (usinage, découpage, etc...) ou par formage (moulage, pliage, thermoformage, etc...) et ce, sans surcoût. Globalement, et peu importe la géométrie de la pièce à produire, les coûts de production sont très faibles, car aucun outillage onéreux n'est nécessaire. Ce sont également toutes les phases de conception, de développement et d'industrialisation qui sont facilitées. La modification des pièces peut se faire à l'infini sans impacter les temps ni les coûts de production. Notamment, ces technologies peuvent être utilisées très tôt, dès les premières phases de conception. Finalement, elles permettent de traiter une vaste variété de matériaux, des polymères aux métaux, en passant par les céramiques.

Dans les entreprises, ces technologies permettent de repenser toute la chaîne de valeur, en passant par l'ingénierie et la production. Une nouvelle phase apparaît dans l'histoire du développement produit et de la stratégie d'approvisionnement au niveau international. De la production de masse, l'industrie s'oriente aujourd'hui vers une personnalisation des produits et une flexibilité de production, faisant nettement croître les besoins en petites et moyennes séries. Ceci explique les fortes attentes qu'ont les industriels concernant l'impression 3D. De fait, le marché de la fabrication additive est l'un des plus prometteurs pour les années à venir.

Malgré un nombre d'avantages conséquent, les technologies de fabrication additive restent limitées en termes d'application. Historiquement utilisées à des fins de prototypage, elles ne sont, aujourd'hui, toujours pas compétitives en production par rapport aux procédés de fabrication standards pour produire des pièces de grande taille et/ou en série. En effet, les technologies actuelles manquent avant tout de productivité: le temps de fabrication est trop long et les pièces obtenues nécessitent une étape de post-traitement chronophage de reprise et/ou d'ajustage. De plus, la précision des pièces obtenues est relativement faible, et aucune tolérance fine n'est envisageable directement. Finalement, ces technologies ne permettent de fabriquer que des pièces de petite taille en présérie ou en très petites séries. Pour fabriquer des pièces de grande taille, définies par un volume important de matière, par exemple supérieur ou égal à 1m³, il faut généralement compter plus d'une dizaine d'heures de temps de fabrication, au minimum. Quelques solutions se développent actuellement mais effectuent toujours un compromis entre d'une part, le temps de fabrication, et d'autre part la qualité donc la précision d'exécution. En somme, l'amélioration d'un des deux paramètres se fait systématiquement au détriment de l'autre.

Parmi les technologies disponibles, la fabrication additive par dépôt de fil, connue sous les sigles DFF (Dépôt Fil Fondu), FFF (Fused Filament Fabrication), FDM (Fused Déposition Modeling) et FGF (Fused Granulated Fabrication ou Fusion Granular Fabrication), est la technologie dominante, en termes de parts de marchés, et est amenée à maintenir sa position de leader dans les prochaines années avec un potentiel de croissance marqué. Actuellement, trois technologies sont disponibles:
- Fabrication additive grand format par dépôt de fil à partir de filament en bobine ;
- Fabrication additive grand format par dépôt de fil à base de granulés ;
- Fabrication additive grand format par dépôt de matière sous énergie concentrée.

Les technologies de dépôt de fil se distinguent par des coûts de production induits parmi les plus faibles du marché. Cependant, elles ne sont pas ou très peu utilisées en production, principalement en raison de leurs performances médiocres, dues au temps d'impression trop long. Elles sont en outre incapables de produire des pièces de grande taille, à haute vitesse, tout en garantissant les tolérances d'exécution requises. Les technologies de dépôt de fil sont généralement plafonnées à un débit de 0.3 kg/h. La haute vitesse peut vouloir dire haut débit, c'est-à-dire des débits supérieurs à 20kg/h. Les vitesses de déplacement de la tête de dépose sont dites rapides lorsqu'elles dépassent les 300mm/s par exemple. C'est la raison pour laquelle les technologies disponibles ne permettent pas aux industriels de les envisager en production. Elles restent intéressantes pour répondre à des besoins de R&D, de prototypage et de recherche mais ne permettent pas une production en série de manière compétitive par rapport aux procédés standards.

Quelques exemples de technologies de dépôt de fil sont décrits dans les publications CN 108 357 091 A, CN 111 633 978 A, CN 110 253 882 B, EP 3 626 439 A1. Cependant aucune de ces solutions n'offre le compromis attendu permettant d'augmenter drastiquement les performances d'exécution en termes de vitesse et de précision d'un procédé de fabrication additive permettant de rivaliser avec les procédés industriels classiques. Les raisons principales sont liées à l'inertie de l'unité de transformation de la matière lorsqu'elle est embarquée avec l'unité de dépose, ou au défaut de maîtrise de la rhéologie de la matière fondue durant toute la durée de son transfert jusqu'à l'unité de dépose lorsque l'unité de transformation est distante de l'unité de dépose.

### Exposé de l'invention

La présente invention vise à combler ce manque en proposant une nouvelle conception de fabrication additive par dépôt de fil fondu à partir de granulés, visant à en augmenter radicalement les performances d'exécution, pour qu'elle puisse se positionner comme une alternative aux procédés de fabrication standards efficace, rentable, flexible, réactive, reproductible, et compétitive pour produire des pièces de grandes dimensions et/ou des pièces en série en milieu industriel, tout en garantissant le respect des tolérances de fabrication requises afin de minimiser l'opération de reprise lorsqu'elle s'avère nécessaire.

Dans ce but, l'invention concerne un procédé du genre indiqué en préambule, comprenant les étapes suivantes :
- une étape d'alimentation d'au moins une matière première,
- une étape de transformation de la matière première en matière fondue dans une unité de transformation fixe située à l'extérieur de ladite chambre de fabrication,
- une étape de transport de la matière fondue à sa température et sa viscosité de transformation dans un tuyau flexible et chauffant depuis ladite unité de transformation fixe jusqu'à une unité de dépose mobile située dans ladite chambre de fabrication, et
- une étape de dépose de ladite matière fondue sous la forme d'un fil fondu en couches successives sur ledit support d'impression par ladite unité de dépose mobile jusqu'à l'obtention de la pièce à fabriquer.

Grâce à cette configuration particulière de l'invention, la vitesse de déplacement de l'unité de dépose et ses déplacements dans l'espace peuvent être beaucoup plus fluides, réactifs, amples et rapides, puisqu'ils sont totalement indépendants de l'inertie et de l'encombrement de l'unité de transformation. En effet, l'unité de transformation n'est plus embarquée sur l'unité de dépose comme dans l'état de l'art, mais déportée à l'extérieur de la chambre de fabrication et reliée à l'unité de dépose par un tuyau flexible chauffant, qui peut suivre sans inertie, ni contrainte les déplacements dans l'espace de l'unité de dépose.

En outre, la rhéologie de la matière fondue est parfaitement maîtrisée durant toute la durée de son transfert de l'unité de transformation distante jusqu'à l'unité de dépose, et ceci indépendamment de la température de chauffe dans l'unité de transformation, des conditions de transfert (variation du débit donc du temps de séjour dans le tuyau et d'un refroidissement variable), des pertes thermiques avec le milieu extérieur (en fonction de la température ambiante, de la pression atmosphérique, des flux d'air dans le lieu de fabrication, etc.). En effet, le tuyau de transport de la matière fondue n'est plus simplement isolé thermiquement comme dans l'état de l'art, mais chauffé par apport d'énergie via un système de chauffe. Dans la configuration de l'invention et à défaut de système de chauffe du tuyau de transport, la matière en transit se solidifierait dans le tuyau et formerait un bouchon impossible à retirer, condamnant ainsi définitivement le tuyau et rendant donc impossible la fabrication additive par dépôt de fil fondu.

Dans une forme préférée de l'invention, ladite étape de dépose consiste à modifier la section du fil fondu pendant la fabrication de ladite pièce, et à adapter automatiquement et instantanément le débit d'impression à la précision d'impression demandée en fonction des parties fabriquées de ladite pièce.

Ainsi, il est possible d'aboutir à un compromis tout à fait innovant entre vitesse d'impression et qualité d'impression permettant d'atteindre des performances équivalentes ou du moins comparables avec des procédés classiques de fabrication industrielle.

En particulier, ladite étape de dépose peut consister à choisir une grosse section de fil fondu déposée avec un haut débit d'impression et une faible précision d'impression pour remplir le coeur de ladite pièce à fabriquer, et à choisir une petite section de fil fondu déposé avec un faible débit d'impression et une grande précision d'impression pour former des contours de ladite pièce à fabriquer.

En outre, ladite étape de dépose peut consister à changer la matière première et/ou la géométrie du fil fondu pendant la fabrication de ladite pièce, pour adapter automatiquement et instantanément la matière première et/ou la géométrie du fil fondu en fonction des parties fabriquées de ladite pièce.

Préférentiellement, ladite étape de dépose est séquencée pour opérer les changements de section et/ou de matière première et/ou de géométrie du fil fondu en fonction des parties fabriquées de ladite pièce.

Dans ce but également, l'invention concerne une machine du genre indiqué en préambule, comprenant :
- une unité d'alimentation d'une matière première,
- une unité de transformation agencée pour changer l'état de la matière première en matière fondue, ladite unité de transformation étant fixe, située à l'extérieur de ladite chambre de fabrication,
- un tuyau flexible et chauffant agencé pour transporter la matière fondue à sa température et sa viscosité de transformation depuis ladite unité de transformation fixe jusqu'à une unité de dépose mobile,
- une unité de dépose mobile située dans ladite chambre de fabrication et comportant au moins une buse de dépose agencée pour déposer ladite matière fondue sous la forme d'un fil fondu en couches successives sur ledit support d'impression et selon une trajectoire prédéterminée jusqu'à l'obtention de la pièce à fabriquer.

Dans une forme préférée de l'invention, ladite unité de transformation comporte au moins une extrudeuse à vis.

En complément, ladite machine peut comporter un dispositif de régulation disposé en aval de ladite unité de transformation, entre ladite unité de transformation et ledit tuyau flexible chauffant ou préférentiellement entre ledit tuyau flexible chauffant et ladite unité de dépose, et agencé pour réguler le débit et la pression de ladite matière fondue en sortie de l'unité de transformation ou préférentiellement à l'entrée de l'unité de dépose. Ledit tuyau flexible chauffant peut être couplé à au moins une résistance électrique, disposée autour du tuyau et agencée pour atteindre et stabiliser une température de consigne adaptée à la matière fondue transportée, sans que cet exemple ne soit limitatif.

Dans une forme préférée de l'invention, ladite unité de dépose comporte un bloc chaud pourvu d'un orifice d'entrée raccordé audit tuyau flexible chauffant ou au dispositif de régulation, et un disque rotatif comportant au moins deux buses de dépose de sections différentes, décalées angulairement. Ledit disque rotatif est, dans ce cas, disposé en aval dudit bloc chaud et agencé pour aligner séquentiellement une buse de dépose dite active, avec un orifice de sortie dudit bloc chaud et autoriser la sortie du fil fondu.

D'une manière avantageuse, ladite unité de dépose peut être inclinée par rapport à la verticale pour présenter la buse de dépose active au plus près du support d'impression ou de la pièce à fabriquer, et de dégager la ou les autres buses de dépose qui sont en attente.

Lesdites buses de dépose peuvent être positionnées sur ledit disque rotatif de sorte qu'en position de travail, l'axe de la buse de dépose qui est active est de préférence confondu avec une verticale.

Dans la forme de réalisation préférée, ledit bloc chaud et ledit disque rotatif peuvent être couplés par un contact surfacique sous pression, et ledit disque rotatif peut former avantageusement un commutateur pour séquentiellement ouvrir le bloc chaud lorsqu'une buse de dépose est alignée avec son orifice de sortie et fermer le bloc chaud lorsque son orifice de sortie est situé entre deux buses de dépose.

Ledit bloc chaud peut être monté dans un bloc support fixe, et peut être assujetti par des organes de rappel en direction dudit disque rotatif autorisant le déplacement angulaire dudit disque rotatif par rapport audit bloc chaud lors d'un changement séquentiel de la buse de dépose active.

En fonction des variantes de réalisation et de la pièce à fabriquer, lesdites au moins deux buses de dépose du disque rotatif peuvent être alimentées avec des matières premières différentes. Dans ce cas, au moins ladite unité d'alimentation, ladite unité de transformation et ledit tuyau flexible chauffant sont dupliqués pour alimenter ladite unité de dépose avec lesdites matières premières différentes.

En complément, ledit bloc chaud peut comporter un obturateur intérieur agencé pour séquentiellement ouvrir et fermer ledit orifice de sortie.

### Brève description des dessins

La présente invention et ses avantages apparaîtront mieux dans la description suivante de plusieurs modes de réalisation donnés à titre d'exemples non limitatifs, en référence aux dessins annexés, dans lesquels:
- la figure 1 est un schéma du procédé de fabrication selon l'invention,
- la figure 2 est une vue simplifiée en perspective d'une machine de fabrication selon l'invention,
- la figure 3 est une vue éclatée d'une unité de dépose de la machine de fabrication de la figure 2,
- la figure 4 est une vue de dessus de l'unité de dépose de la figure 3,
- la figure 5 est une vue en coupe axiale de l'unité de dépose de la figure 4 selon le plan de coupe V-V,
- la figure 6 est une vue agrandie du détail VI de l'unité de dépose de la figure 5,
- la figure 7 est une vue en coupe axiale d'une buse de matière appartenant à l'unité de dépose de la figure 3,
- la figure 8 est une vue en coupe axiale d'un bloc chaud de l'unité de dépose équipée d'un obturateur en position fermée,
- la figure 9 est une vue équivalente à la figure 8 montrant l'obturateur en position ouverte,
- la figure 10 est une vue en perspective d'une pièce fabriquée selon le procédé et la machine de fabrication additive de l'invention, montrant ses parties constitutives, et
- la figure 11 est une vue en coupe transversale de la pièce de la figure 10 montrant ses différentes parties constitutives.

### Description des modes de réalisation

Dans les exemples de réalisation illustrés, les éléments ou parties identiques portent les mêmes numéros de référence. En outre, les termes qui ont un sens relatif, tels que vertical, horizontal, droite, gauche, avant, arrière, au-dessus, en-dessous, etc. doivent être interprétés dans des conditions normales d'utilisation de l'invention, et telles que représentées sur les figures.

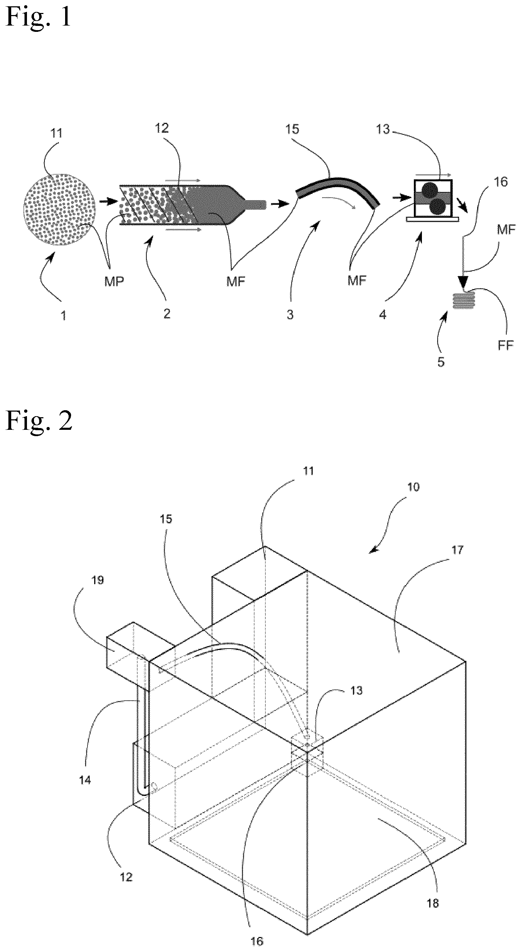

En référence au schéma de la figure 1, le procédé de fabrication selon l'invention comprend les étapes suivantes :
- étape 1 : alimentation d'une matière première MP solide,
- étape 2 : transformation de la matière première MP solide en matière fondue MF,
- étape 3 : transport de la matière fondue MF,
- étape 4 : régulation du débit de la matière fondue MF, et
- étape 5 : dépose de la matière fondue MF sous la forme d'un fil fondu FF en couches successives selon une trajectoire paramétrée pour fabriquer une pièce tridimensionnelle.

Les étapes 3 et 4 peuvent également être inversées en fonction des besoins.

A l'étape 1, le procédé de fabrication admet en entrée, dans une unité d'alimentation 11, une matière première constituée de tout type de polymères, composites ou non, apte à être transformée par abaissement de sa viscosité à la suite d'une élévation de la température. Cette matière première est de préférence constituée en tout ou en partie d'un polymère thermoplastique, et peut ou non comporter tout type de renforts, additifs et/ou adjuvants. La matière première doit être telle que sa viscosité se stabilise à un niveau dit "bas" augmentant sa capacité d'écoulement, dès lors qu'elle est exposée à une température dite de transformation. A l'inverse et dès que la température d'exposition est abaissée en dessous de la température de transformation, la viscosité de la matière doit retrouver un niveau dit "haut" réduisant sa capacité d'écoulement. Cette capacité de fluidification favorise le transfert de la matière première jusqu'à l'étape 5 de dépose. Elle peut se présenter sous différentes formes telles que par exemple en éléments dits vitreux ou solides tels que fragments, granulés, paillettes, pellets, pastilles, poudre, et similaire, ou sous forme de pâte, ou encore de fluide non-Newtonien. Dans le cas d'éléments vitreux ou solides, la matière première présente de préférence une granulométrie relativement homogène et appropriée à l'étape 2 de transformation. En outre, c'est sous cette forme que le polymère thermoplastique est le plus répandu et exploité, pour un prix en moyenne 10 fois moins cher que son équivalent sous forme de filament conditionné en bobine. Cette matière première peut être transférée de l'unité d'alimentation 11 à une unité de transformation 12 par tout moyen adapté, qu'il soit manuel, semi-automatique ou automatique en utilisant les périphériques standards de l'industrie de la plasturgie, tels que des sécheurs, trémies, systèmes d'aspiration, silos, etc.

A l'étape 2, la transformation de la matière première, étape dite de plastification, consiste en un changement d'état des particules de matière solide en une masse pâteuse uniforme plus homogène. Dans le cas d'un polymère thermoplastique, un apport en énergie thermique et en énergie mécanique conduit à l'élévation de la température et donc à une fluidification de la matière. Cette plastification se fait à l'aide d'une unité de transformation 12, préférentiellement de type extrudeuse à vis rotative ou tout autre dispositif de plastification similaire. S'il s'agit d'une extrudeuse, tout type de géométrie de vis d'extrusion peut convenir. La technologie d'extrusion à vis a l'avantage d'abaisser rapidement la viscosité du polymère thermoplastique en combinant :
- l'élévation de la température par des colliers chauffants et tout apport d'énergie thermique par des moyens équivalents,
- le cisaillement entre les filets de la vis et le tube de l'extrudeuse : les polymères thermoplastiques d'extrusion sont rhéofluidifiants, c'est-à-dire que leur viscosité baisse si la matière est cisaillée, et
- l'élévation de la pression en bout de vis : le profil de la vis comprime le polymère, fait monter la pression et donc la température du mélange pour fondre et mélanger encore plus efficacement la matière.

La quasi-totalité des polymères de l'industrie sont conçus pour être transformés avec ce procédé d'extrusion, ayant l'avantage de combiner tous ces effets. Il n'existe pas de solutions équivalentes autre que l'extrusion à vis observant les mêmes caractéristiques. En fonction des besoins, l'invention peut également mettre en oeuvre d'autres types d'unité de transformation, tel qu'un pétrin mélangeur chauffant ou similaire, et ce même si leur niveau de performances et/ou de praticités est moindre.

Dans le cas d'une extrudeuse, la rotation de la ou des vis d'extrusion génère un déplacement de la matière créant ainsi un débit volumique mesurable. L'extrudeuse doit être apte à fournir un débit de sortie stable dans la durée et conforme à un débit de consigne préalablement paramétré. L'utilisation d'une extrudeuse à vis est ainsi privilégiée car elle permet de :
- un changement d'état du polymère rapide et efficace,
- une simplification dans le processus de changement de matière : il suffit d'insérer quelques granulés de purge pour expulser les débris de la matière précédente avant d'introduire la nouvelle matière. L'extrusion à vis est ainsi particulièrement adaptée à un usage en production où les changements de matière sont fréquents et se doivent d'être très rapides, et surtout sans débris de la matière précédent venant "polluer" la nouvelle matière.
- une optimisation de la conception de l'unité de transformation 12 puisqu'une extrudeuse à vis permet de générer un débit en sortie, sans nécessiter de pompe en amont du tuyau. Dans l'invention, le tuyau est directement raccordé en sortie d'extrusion. L'unité de transformation 12 est donc très compacte, et simplifie les configurations d'impression multi-matières, qui nécessitent une extrudeuse à vis par matière.

L'unité de transformation 12 est avantageusement positionnée de manière fixe, en dehors de la chambre de fabrication 17. L'extrudeuse peut donc être exploitée au maximum de ses capacités, et ne pénalise aucunement la vitesse de déplacement de l'unité de dépose 16 à l'étape 5, à l'inverse des machines de fabrication additive de l'état de l'art. En effet, dans l'état de l'art, l'extrudeuse est positionnée dans la chambre de fabrication, couplée directement à l'unité de dépose, ce qui impose de déplacer un ensemble lourd et encombrant avec une très forte inertie limitant la vitesse de déplacement de l'unité de dépose et sa liberté de mouvement. En outre, le fait que l'extrudeuse est fixe, elle peut potentiellement être beaucoup plus massive que les extrudeuses embarquées de l'état de l'art, et donc développer une plus grande puissance d'extrusion. L'implantation de l'extrudeuse hors zone d'impression, c'est-à-dire à distance de la chambre de fabrication 17, permet également de simplifier la conception de l'unité de transformation 12 et son utilisation en termes de maintenance, de mise en route, etc. en rendant le/les extrudeuses à la fois très accessibles à l'extérieur de la chambre de fabrication 17 et très modulables. Enfin, l'unité de transformation 12 peut être positionnée à distance de la chambre de fabrication 17, sans préjudice sur la qualité du fil fondu en sortie de l'unité de dépose 16 grâce au tuyau de transport 15 flexible et chauffé.

A l'étape 3, la matière fondue est transportée de l'unité de transformation 12 fixe jusqu'à une unité de dépose 16 mobile, par un tuyau flexible 15, chauffé à une température donnée. Ce tuyau flexible chauffant 15 d'une longueur définie peut être constitué de plusieurs couches coaxiales pour assurer ses différentes fonctions, telles que : écoulement de la matière fondue, chauffage de la matière fondue pour la maintenir à une viscosité donnée ou lui faire atteindre une viscosité donnée si celle-ci est différente de celle en sortie d'extrudeuse, isolation du tuyau vis-à-vis des périphériques externes, et contrôle de l'écoulement et de la température de la matière fondue transportée. La structure et les couches constitutives du tuyau flexible chauffant 15 sont déterminées en fonction de la matière à transporter, de son caractère corrosif ou abrasif, et de sa température de transformation. Ce tuyau flexible 15 est chauffé par exemple par des résistances électriques, de type colliers chauffants, cordons et/ou rubans chauffants, disposés autour du tuyau transportant la matière et permettant ainsi d'atteindre et de stabiliser la température de consigne. L'utilisation d'un chauffage électrique permet de simplifier la conception du tuyau flexible 15 en termes de poids, de dimensions, d'étanchéité, et de calorifugeage. Le chauffage électrique permet également de mieux contrôler la température car les résistances électriques sont très réactives à un changement de température de consigne, ou encore d'être utilisé pour certaines applications soumises à des normes sanitaires strictes, comme dans le médical. Bien entendu, tout autre moyen de chauffage du tuyau flexible 15 peut convenir en fonction des applications, tel que par vapeur, par huile, par induction, ou similaire. Le tuyau est conçu de manière flexible autorisant une certaine amplitude de mouvements pour effectuer l'étape 5 de dépose par rapport à l'unité de transformation 12 fixe et distante de ladite chambre de fabrication 17.

A l'étape 4, et afin de mieux contrôler les caractéristiques du flux de matière fondue à l'entrée de l'unité de dépose 16, un dispositif de régulation 13 de débit et de pression peut être prévu en aval de l'extrudeuse, et préférentiellement en aval du tuyau flexible chauffant 15. Ce dispositif de régulation 13 peut être rendu nécessaire en raison du cheminement de la matière fondue au-delà de l'extrudeuse, et en particulier à travers le tuyau flexible chauffant 15 qui assure le transport de la matière fondue à l'étape 3. Plus le chemin de l'unité de transformation 12 à l'unité de dépose 16 est long, plus l'extrudeuse doit fournir une pression importante. Or, la stabilité du débit de sortie de l'extrudeuse peut être dégradée, notamment en fonction de la vitesse de rotation de la ou des vis d'extrusion. Le dispositif de régulation 13 réalise alors une interface entre le tuyau flexible chauffant 15 et l'unité de dépose 16 qui permet de pallier ce défaut éventuel de stabilité du débit. Il peut être constitué d'une pompe à engrenage, appelé également pompe à polymère, ou de tout autre moyen équivalent, qui permet de réguler le débit du flux de matière fondue sortant de l'extrudeuse et d'assurer une pression maîtrisée et constante, malgré d'éventuelles variations de pression en sortie d'extrudeuse. L'efficacité du dispositif de régulation 13 est à son maximum au plus proche du point de dépose de la matière fondue. Ainsi, le dispositif de régulation 13 pourra être embarqué sur l'unité de dépose 16.

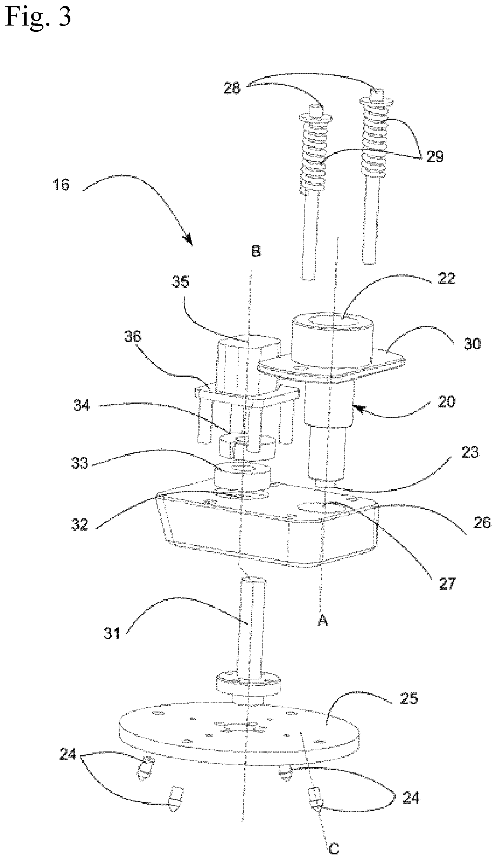

A l'étape 5, la dépose de la matière fondue sous la forme de fil fondu nécessite une unité de dépose 16 agencée pour contrôler et calibrer la sortie de la matière fondue au-dessus d'un support d'impression 18 dans une chambre de fabrication 17. L'unité de dépose 16 est également chauffée pour maintenir la matière fondue à une viscosité donnée. En outre, l'unité de dépose 16 est mobile et mise en mouvement dans la chambre de fabrication 17 par rapport au support d'impression 18 selon une trajectoire préalablement paramétrée pour fabriquer une pièce tridimensionnelle couche par couche suivant la technique de fabrication additive par dépôt de fil fondu. L'unité de dépose 16 comporte au moins une buse de dépose 24 (figure 3) déterminant la section du fil fondu déposé en termes de dimension transversale et de géométrie. L'unité de dépose 16 peut être embarquée sur un chariot mobile dans l'espace selon 3 axes ou plus, sur une machine à commande numérique ou encore à l'extrémité d'un bras robotisé multiaxes en fonction de la pièce à fabriquer.

La figure 2 illustre schématiquement un exemple de machine de fabrication 10 selon l'invention. Elle comporte dans l'ordre :
- une unité d'alimentation 11 dans laquelle la matière première solide est stockée par exemple sous la forme de granulés,
- une unité de transformation 12, telle qu'une extrudeuse à vis, alimentée par exemple automatiquement en matière première solide par l'unité d'alimentation 11, pour la transformer en matière fondue,
- un tuyau flexible chauffant 15 relié à la sortie de l'extrudeuse à vis par un conduit 14 via un adaptateur 19, et à l'entrée du dispositif de régulation 13 pour acheminer la matière fondue jusque dans la chambre de fabrication 17,
- un dispositif de régulation 13 du débit et de la pression du flux de matière fondue, relié à la sortie du tuyau flexible chauffant 15 et à l'entrée de l'unité de dépose 16, et
- une unité de dépose 16 mobile à l'intérieur de la chambre de fabrication 17 pour déposer la matière fondue sous forme d'un fil fondu sur un support d'impression 18 par couches successives jusqu'à obtenir une pièce à fabriquer.

La machine de fabrication 10 de l'invention se distingue de l'état de l'art par le fait que l'unité de transformation 12 est positionnée à un emplacement fixe, en dehors de la chambre de fabrication 17 et à distance de l'unité de dépose 16. Grâce à cette configuration, la vitesse de déplacement de l'unité de dépose 16 n'est pas pénalisée par la masse ni l'encombrement de l'unité de transformation 12, comme c'est le cas dans l'état de l'art. En outre, l'unité de dépose 16 comporte avantageusement plusieurs buses de dépose 24 (figure 3) interchangeables de manière quasi instantanément et automatiquement en cours de fabrication. Cette faculté permet de modifier la buse de dépose 24 et d'adapter ainsi le débit d'impression et/ou la matière du fil fondu et/ou la section et/ou la géométrie du fil fondu déposé en fonction des parties de la pièce à fabriquer, comme expliqué plus loin.

Ainsi, la machine de fabrication 10 peut être alimentée avec une seule matière première ou plusieurs matières premières. Dans ce dernier cas, soit on duplique le système comprenant l'unité d'alimentation 11, l'unité de transformation 12, le tuyau flexible chauffant 15 et le dispositif de régulation 13 en fonction du nombre de matières premières différentes et l'unité de dépose 16 est commune avec des entrées multiples, soit on duplique l'ensemble de l'unité d'alimentation 11 à l'unité de dépose 16 pour avoir un système complet par matière, avec plusieurs unités de dépose 16 embarquées sur la partie mobile de la machine.

L'unité de dépose 16 est illustrée plus en détail dans les figures 3 à 9. Elle comporte un bloc chaud 20 traversé par un canal 21 s'étendant entre un orifice d'entrée 22 relié au tuyau flexible chauffant 15 par un raccord étanche (non représenté), et un orifice de sortie 23 communiquant avec une buse de dépose 24. La buse de dépose 24 est portée par un disque rotatif 25. Ce disque rotatif 25 comporte plusieurs buses de dépose 24, et par exemple quatre buses de dépose 24, ce nombre n'étant pas limitatif. Les buses de dépose 24 sont réparties angulairement entre elles, de manière régulière ou non, sur un cercle passant par l'orifice de sortie 23 du bloc chaud 20. Les buse de dépose 24 sont constituées d'un corps traversé par un conduit rectiligne d'axe C, la section du conduit déterminant la section du fil fondu qui en sort. Chaque buse de dépose 24 est de préférence différente des autres buses au niveau de sa section de sortie, en dimension transversale et/ou en géométrie. La géométrie de la section de sortie des buses de dépose 24 peut être comprise dans le groupe comprenant un cercle, un rectangle, un carré, un ovale ou toute autre forme géométrique ou non compatible avec le besoin d'impression. Et la dimension transversale de la section de sortie des buses de dépose 24 peut être définie par le diamètre d'un cercle, la longueur et la largeur d'un rectangle, le coté d'un carré, les deux dimensions transversales d'un ovale, ou toute autre dimension transversale d'une autre forme géométrique ou non. En outre, les buses de dépose 24 peuvent être réalisées dans des matériaux différents, en fonction de la ou des matières premières MP qui alimentent la machine de fabrication 10, et de leurs propriétés abrasives ou corrosives.

L'unité de dépose 16 comporte un bloc support 26 portant le bloc chaud 20 suivant un axe A et le disque rotatif 25 suivant un axe B parallèle à l'axe A. Le bloc chaud 20 est monté au travers d'un alésage 27 du bloc support 26 moyennant un ajustement glissant au niveau des deux zones de guidage 27a, 27b haute et basse, laissant un degré de liberté en translation axiale audit bloc chaud 20. En outre, le bloc chaud 20 est assujetti en translation axiale en direction du disque rotatif 25 par des organes de rappel. Ces organes de rappel sont constitués dans l'exemple représenté, sans que cet exemple ne soit limitatif, par deux vis de précontrainte 28 parallèles, associées à deux ressorts de compression 29. Les vis de précontrainte 28 traversent une collerette 30 du bloc chaud 20 et sont vissées dans le bloc support 26. Les ressorts de compression 29 s'étendent entre la base des têtes des vis de précontrainte 28 et ladite collerette 30. De cette manière, lorsque les vis de précontrainte 28 sont vissées, elles compriment les ressorts de compression 29 qui génèrent alors une force de rappel d'autant plus importante qu'ils sont comprimés. Cette force est transmise à l'interface existant entre l'extrémité du bloc chaud 20 et le disque rotatif 25. L'extrémité de l'orifice de sortie 23 du bloc chaud 20 est par conséquent en appui permanent sur la face correspondante du disque rotatif 25 au travers d'un contact surfacique sous pression. Cette liaison mécanique par contact plan sous pression a l'avantage d'assurer l'étanchéité de l'interface entre le bloc chaud 20 et le disque rotatif 25 vis-à-vis de la matière fondue sous pression. Elle a également l'avantage de permettre le déplacement du disque rotatif 25 relativement par rapport au bloc chaud 20 uniquement lors de la rotation du disque et sans mécanisme additionnel. Le disque rotatif 25 constitue alors un moyen de commutation simple permettant de faire passer automatiquement le bloc chaud 20 d'une position fermée dans laquelle il est positionné entre deux buses de dépose 24 et la face pleine correspondante du disque ferme son orifice de sortie 23 interrompant la dépose du fil fondu, et une position ouverte dans laquelle il est aligné sur une des buses de dépose 24 et la buse de dépose 24 active ouvre son orifice de sortie 23 autorisant la dépose du fil fondu.

Dans une variante de réalisation non représentée, l'étanchéité de l'interface entre l'orifice de sortie 23 du bloc chaud 20 et le disque rotatif 25 peut être réalisée par un ajustement mécanique glissant entre les deux éléments, induisant ainsi un contact surfacique permanent à proximité des buses de dépose 24. Dans cette configuration, le bloc chaud 20 peut comporter au droit de son orifice de sortie 23 une forme enveloppante, coiffant le chant du disque rotatif 25et réalisant une double portée avec le disque rotatif 25 de manière à être en contact simultanément avec sa surface supérieure et sa surface inférieure. Cette construction permet d'assurer un jeu mécanique axial maîtrisé au niveau de l'interface. Une configuration alternative peut être envisagée avec à l'inverse une forme enveloppante située sur le disque rotatif 25, contenant alors l'interface et l'orifice de sortie 23 du bloc chaud 20. Ces différents cas de figure permettent d'assurer l'étanchéité de l'interface de manière avantageuse, en contenant l'écoulement de la matière première sans induire de pression de contact entre le bloc chaud 20 et le disque rotatif 25, minimisant de fait les frottements et limitant le risque de blocage lors de la rotation du disque 25.

Le disque rotatif 25 est solidaire d'un arbre de transmission 31 monté en rotation autour de l'axe B dans un logement 32 du bloc support 26 via des roulements à billes 33 ou similaires. Il est verrouillé axialement par une bague de serrage 34 ou tout autre dispositif de blocage. L'arbre de transmission 31 est couplé à un actionneur 35, tel qu'un moteur pas à pas, un servomoteur, un vérin rotatif ou similaire, pour commander le déplacement angulaire du disque rotatif 25 autour de l'axe B et positionner avec précision la buse de dépose 24 active sélectionnée en face de l'orifice de sortie 23 du bloc chaud 20. L'actionneur 35 peut être fixé sur le bloc support 26 au moyen d'une console 36 ou de tout autre moyen adapté.

Dans une variante de réalisation non représentée, le disque rotatif 25 peut être pourvu d'une couronne dentée, disposée dans un plan normal à l'arbre de transmission 31. L'actionneur 35 n'est alors pas couplé à l'arbre de transmission 31 mais équipé d'une roue dentée entraînant directement ou indirectement la couronne dentée elle-même solidaire du disque rotatif 25. Dans le cas où le diamètre de la couronne dentée est supérieur au diamètre de la roue dentée, cela permet avantageusement de maximiser le couple transmis, limitant ainsi d'éventuels blocages liés aux frottements à l'interface entre le disque rotatif 25 et le bloc chaud 20.

Dans une autre variante de réalisation non représentée, l'actionneur 35 est ancré d'une part à l'unité de dépose 16 et agit d'autre part sur le disque rotatif 25 en un point de celui-ci non confondu avec l'axe de rotation B de l'arbre de transmission 31 permettant, par l'application d'une force tangentielle, la génération d'un moment de rotation actionnant le disque rotatif 25. Dans le cas où la distance entre le point d'application et l'axe de rotation B est maximale, le couple de rotation transmis est favorablement plus important, limitant ainsi d'éventuels blocages liés aux frottements à l'interface entre le disque rotatif 25 et le bloc chaud 20.

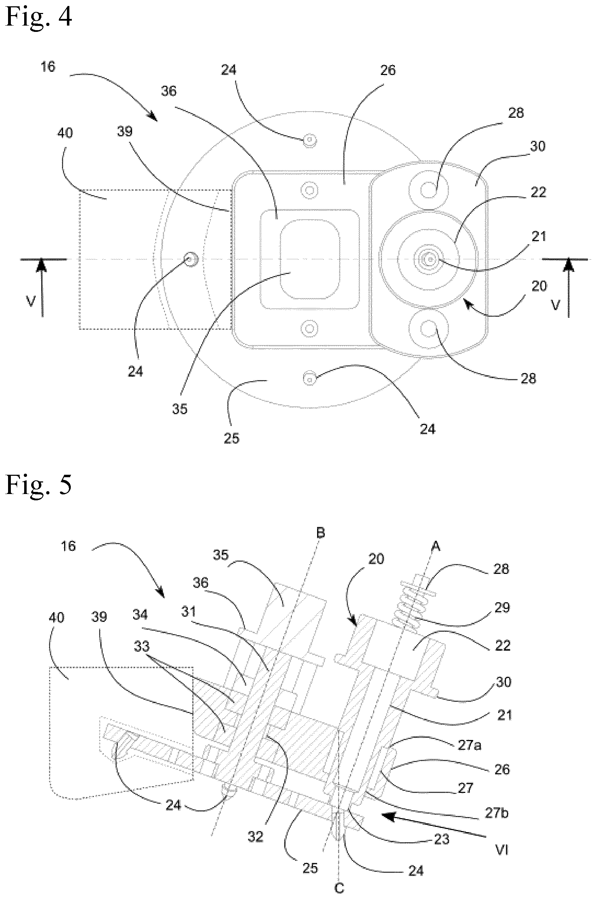

Dans l'exemple représenté à la figure 5, l'unité de dépose 16 n'est pas verticale, mais de préférence inclinée par rapport à la verticale, par exemple d'un angle compris entre 0 et 90°, ces valeurs extrêmes étant exclues, et de préférence égal à 20° sans que ces valeurs ne soient limitatives. Cette inclinaison permet d'abaisser le niveau de sortie du flux de matière fondue par la buse de dépose 24 active au plus près du support d'impression 18 ou de la pièce en cours de fabrication, et de dégager à un niveau supérieur les autres buses de dépose 24 en attente ou passives. Bien entendu, cet exemple de réalisation n'est pas limitatif et toute autre variante d'un disque rotatif, articulé ou non, permettant de remplir la même fonction, à savoir définir une position de travail pour une buse de dépose active à un niveau inférieur par rapport aux positions d'attente pour les autres buses de dépose passives, pourrait convenir. Les buses de dépose 24 sont disposées sur le disque rotatif 25 de telle sorte qu'en position de travail, l'axe C de la buse de dépose 24 active est confondu avec une verticale. Ainsi, le fil fondu sortant de la buse de dépose 24 active est également vertical et peut être déposé avec précision à l'endroit souhaité.

Les buses de dépose 24 sont chacune thermorégulées grâce à un élément de chauffage non représenté. Il peut s'agir d'un collier chauffant résistif associé à un thermocouple, d'une cartouche chauffante ou de tout autre élément chauffant adapté. La régulation peut s'opérer de manière individuelle sur chaque buse de dépose 24, de même que de manière généralisée avec une seule température cible pour l'ensemble des buses.

Celles-ci peuvent atteindre des températures de l'ordre de plusieurs centaines de degrés Celsius. Afin de minimiser les échanges thermiques avec les autres composants de l'unité de dépose 16, les zones périphériques aux buses de dépose 24 peuvent être évidées afin de minimiser davantage la conduction thermique. La gestion des températures à travers l'unité de dépose 16 est améliorée avec l'ajout de ventilateurs axiaux non représentés avantageusement positionnés pour refroidir certaines zones du disque rotatif 25, de l'arbre de transmission 31 ou encore des roulements à billes 33 par exemple.

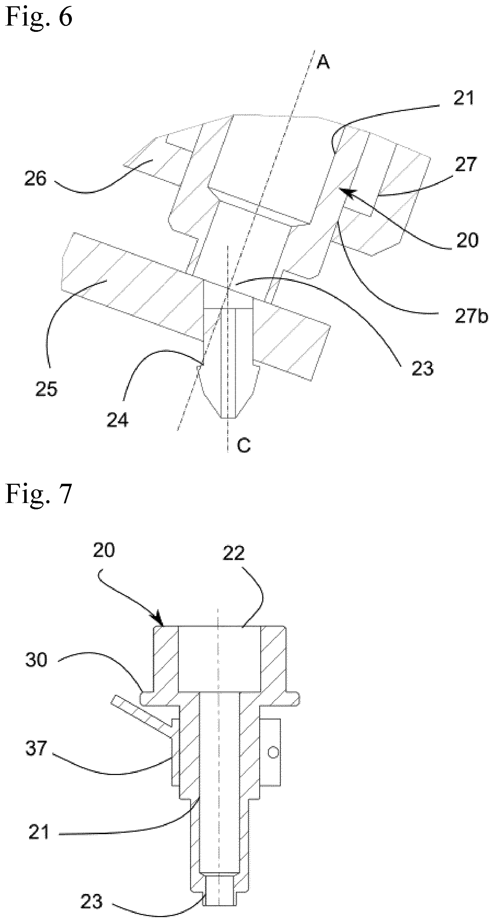

Le bloc chaud 20 est thermorégulé grâce à un élément de chauffage couplé à sa surface extérieure. Il peut s'agir d'un collier chauffant résistif 37, associé à un thermocouple tel qu'illustré à la figure 7, ou de tout autre élément chauffant adapté. Le bloc chaud 20 peut atteindre des températures de l'ordre de plusieurs centaines de degrés Celsius. Afin de minimiser les échanges thermiques avec les autres composants de l'unité de dépose 16, les deux zones de guidage 27a, 27b présentent de faibles surfaces de contact avec le bloc chaud 20. L'évidement de matière prévu dans les zones périphériques aux zones de guidage 27a, 27b permet de minimiser davantage la conduction thermique vers les autres composants reliés à l'unité de dépose 16.

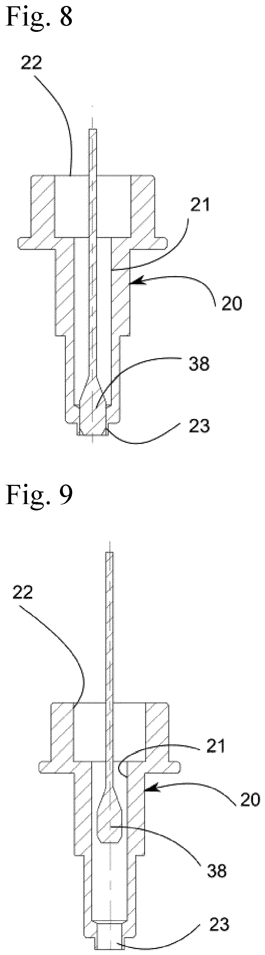

Dans une variante représentée dans les figures 8 et 9, le bloc chaud 20 peut comporter dans son volume intérieur un obturateur 38, afin de mieux contrôler le flux de matière fondue. Il peut s'agir d'un pointeau monté axialement dans le bloc chaud 20 et commandé par un organe (non représenté) entre une position fermée représentée à la figure 8 et une position ouverte représentée à la figure 9 en fonction des séquences de fabrication.

Le bloc support 26 est le composant central et structurel de l'unité de dépose 16 reliant tous les composants entre eux de l'unité de dépose 16. Ses faces latérales 39 rendent possible le couplage de l'unité de dépose 16 à un élément externe, par exemple à un actionneur mécanique, tel qu'un chariot, une machine à commande numérique ou un bras robots (non représenté), permettant la mise en mouvement de l'unité de dépose 16. De plus, un module additionnel 40 peut être monté directement sur le bloc support 26, comme illustré dans les figures 4 et 5. En l'occurrence, il peut s'agir d'un module additionnel 40 interagissant avec les buses de dépose 24 en attente ou passives, comme une station de nettoyage ou une station de chauffe, ces exemples n'étant pas limitatifs.

La machine de fabrication 10 selon l'invention rend ainsi possible la production industrielle d'une pièce, quel que soit son volume et/ou sa complexité et/ou le nombre à produire, par dépôt de matière de manière productive et ainsi compétitive. La pièce à fabriquer est numérisée et un logiciel définit les trajectoires dans l'espace que l'unité de dépose 16 doit suivre pour construire ladite pièce le plus fidèlement et le plus qualitativement possible. Lors de la numérisation, la pièce à fabriquer est en outre décomposée en différentes parties à fabriquer selon le degré de précision requis et/ou le type de matière requis et/ou le motif d'impression pour chaque partie constitutive.

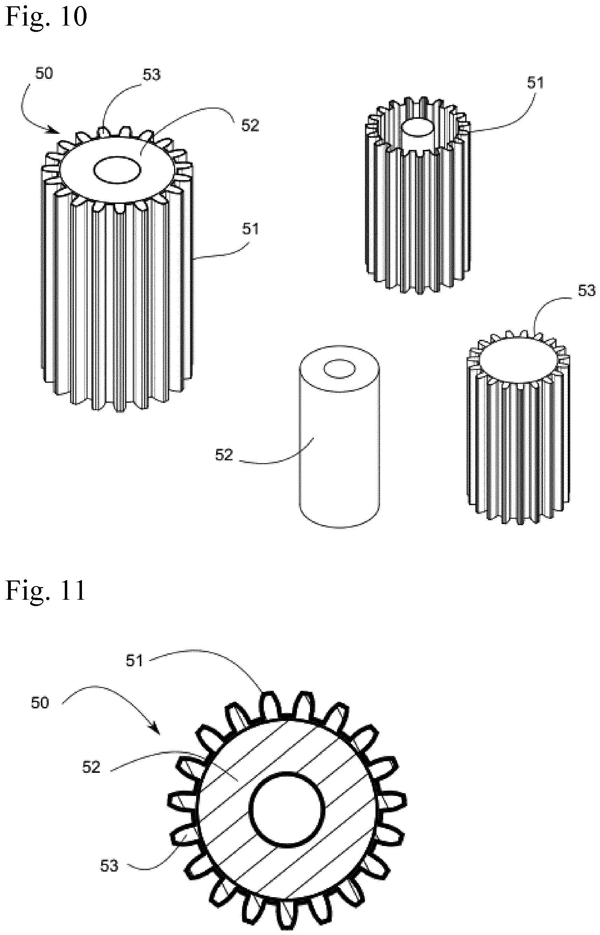

Les figures 10 et 11 illustrent à titre d'exemple un pignon denté 50 à fabriquer. Dans cet exemple, le pignon denté 50 peut être décomposé en au moins trois parties ayant des propriétés différentes, comme:
- une partie externe 51, appelée coque ou enveloppe, de faible épaisseur, qui nécessite à la fois une très grande précision de fabrication et une très grande résistance mécanique, car elle doit assurer une fonction d'engrenage avec une autre pièce et transmettre des efforts dynamiques sans jeu ;
- une partie centrale 52, appelée coeur, qui donne le volume à la pièce et nécessite une résistance mécanique mais sans grande précision car l'alésage central est destiné à monter le pignon sur un arbre de transmission par clavetage ou autre moyen de fixation ; et
- une partie intermédiaire 53, située entre la partie externe 51 et la partie centrale 52, d'épaisseur moyenne, qui nécessite une bonne précision et une résistance mécanique suffisante pour former les dents du pignon et soutenir la partie externe 51.

Dans cet exemple, il est possible d'utiliser trois buses de dépose 24, de section de sortie circulaire et de diamètres différents, pouvant être alimentées par une même matière première, telles que :
- une première buse 24 d'un tout petit diamètre, par exemple égal à 0,4mm, pouvant correspondre à l'épaisseur de la paroi, associée à un faible débit d'impression, par exemple inférieur ou égal à 1kg/h, permettant de garantir une très grande précision d'impression, par exemple une hauteur de couches (précision verticale) d'environ 0,1mm, pour former la partie externe 51 de la pièce ;
- une buse de dépose 24 d'un diamètre moyen, par exemple égal à 1mm, associée à un débit d'impression moyen de quelques kilogrammes par heure, par exemple d'environ 3kg/h, pour une précision d'impression moyenne, par exemple une hauteur de couches d'environ 0,8mm, et former la partie intermédiaire 53 de la pièce ; et
- une buse de dépose 24 d'un grand diamètre, par exemple égal à 10mm, associée à un débit d'impression très élevé de quelques dizaines de kilogrammes par heure, par exemple d'environ 20kg/h, pour une précision faible, par exemple une hauteur de couches d'environ 5mm, pour former la partie centrale 52 de la pièce. Bien entendu, ces valeurs ne sont données qu'à titre indicatif et peuvent varier en fonction des températures de transformation, des matières premières utilisées, etc...

Pour produire cette pièce, le logiciel de pilotage de la machine va séquencer la fabrication pour permettre de changer automatiquement et instantanément la buse de dépose 24 en fonction de la partie de la pièce à fabriquer. Pour ce faire, le disque rotatif 25 est commandé angulairement très précisément par l'actionneur 35 pour changer la buse de dépose 24 active qui est alignée sur l'orifice de sortie 23 du bloc chaud 20, lequel est en permanence alimenté par la matière fondue sous pression depuis l'unité de transformation 12 via le tuyau flexible chauffant 15 et le dispositif de régulation 13. Ces changements de buses de dépose 24 ont l'avantage d'être effectués de manière continue sans arrêt de la machine au cours du processus de fabrication de ladite pièce.

L'intérêt de ne travailler qu'avec une seule unité de dépose 16 à l'inverse d'une pluralité d'unités de dépose de l'art antérieur réside dans :
- la simplification et la compacité de l'unité de dépose 16, qui peut embarquer par exemple au moins quatre buses de dépose 24 différentes pour une seule et même arrivée de matière,
- la rapidité du changement entre deux buses de dépose 24, qui est quasi-instantanée (~0.5 sec), paramètre très important puisque pour une pièce de 1m de haut, il y a au moins 2000 couches de matière superposées. Donc si deux buses de dépose différentes sont utilisées, cela correspond à un total de 4000 changements sur cet exemple. Avec deux buses de dépose séparées, le temps de changement est de plusieurs secondes (entre 3 et 5 généralement), qui engendre un temps mort entre 3.3h et 5.5h pour changer de buse de dépose à chaque couche. Avec la solution de l'invention, ce temps mort ne représente plus que 0.5h,
- l'amélioration de la précision de repositionnement entre deux buses de dépose, car la précision d'usinage est dans l'invention au centième de mm près (+/-0.01mm). Avec deux buses de dépose séparées comme dans l'art antérieur, cette précision est soit dégradée puisque les solutions de mouvement classiques ont généralement une précision de l'ordre du dixième de mm (+/- 0.1 à 0.3mm), soit responsable d'un surcoût conséquent pour intégrer et dupliquer des solutions de mouvement très précises. La précision de fabrication de la pièce obtenue en est donc directement affectée, étant précisé que les valeurs ne sont données qu'à titre indicatif.

Le pignon denté 50 n'est donné qu'à titre d'exemple pour illustrer comment il est possible de penser autrement la fabrication des pièces industrielles en les décomposant en sous-parties, afin d'optimiser et de tirer le meilleur parti du procédé de fabrication additive par dépôt de fil fondu, selon l'invention. Ce procédé permet notamment de réduire les temps d'impression d'un coefficient de 100 par rapport aux leaders du marché, de produire des pièces plus grandes par exemple jusqu'à 8m³, des pièces multi-matériaux par exemple jusqu'à 10 polymères différents simultanément, ces polymères pouvant être combinés entre des polymères classiques jusqu'aux polymères les plus techniques, le procédé étant flexible, évolutif et intelligent.

Il ressort clairement de cette description que l'invention permet d'atteindre les buts fixés, et permet d'amener la technologie de fabrication additive et ses avantages au sein des processus de production industrielle, offrant une solution de fabrication alternative très flexible et compétitive. Ainsi, elle peut être intégrée facilement à l'écosystème de l'industrie, en particulier en termes de standards de matières premières et de connectiques. Tous ces éléments favorisent largement la transition des technologies d'impression 3D du bureau d'étude aux unités de production.

Les caractéristiques techniques des différents modes de réalisation et variantes mentionnés ci-dessus peuvent être, en totalité ou pour certaines d'entre elles, combinées entre elles, sans sortir des revendications annexées.

## Revendications

1. Procédé de fabrication additive par dépôt de fil fondu en couches successives sur un support d'impression (18) dans une chambre de fabrication (17) pour fabriquer une pièce tridimensionnelle, comprenant les étapes suivantes :
- une étape d'alimentation (1) d'au moins une matière première,
- une étape de transformation (2) de la matière première en matière fondue dans une unité de transformation (12) fixe, située à l'extérieur de ladite chambre de fabrication (17),
- une étape de transport (4) de la matière fondue à sa température et sa viscosité de transformation dans un tuyau flexible et chauffant (15) depuis ladite unité de transformation (12) fixe jusqu'à une unité de dépose (16) mobile située dans ladite chambre de fabrication (17), et
- une étape de dépose (5) de ladite matière fondue sous la forme d'un fil fondu en couches successives sur ledit support d'impression (18) par ladite unité de dépose (16) mobile jusqu'à l'obtention de la pièce à fabriquer.

2. Procédé selon la revendication 1, dans lequel ladite étape de dépose (5) consiste à modifier la section du fil fondu pendant la fabrication de ladite pièce, et à adapter automatiquement et instantanément le débit d'impression à la précision d'impression demandée en fonction des parties fabriquées de ladite pièce.

3. Procédé selon l'une quelconque des revendications 1 et 2, dans lequel ladite étape de dépose (5) consiste à choisir une grosse section de fil fondu déposée avec un haut débit d'impression et une faible précision d'impression pour remplir le coeur de ladite pièce à fabriquer, et à choisir une petite section de fil fondu déposée avec un faible débit d'impression et une grande précision d'impression pour former des contours de ladite pièce à fabriquer.

4. Procédé selon l'une quelconque des revendications 1 à 3, dans lequel ladite étape de dépose (5) consiste à changer la matière première du fil fondu pendant la fabrication de ladite pièce, pour adapter automatiquement et instantanément la matière première du fil fondu en fonction des parties fabriquées de ladite pièce.

5. Procédé selon l'une quelconque des revendications 1 à 4, dans lequel ladite étape de dépose (5) consiste à changer la géométrie du fil fondu pendant la fabrication de ladite pièce, pour adapter automatiquement et instantanément la géométrie du fil fondu en fonction des parties fabriquées de ladite pièce.

6. Procédé selon l'une quelconque des revendications 1 à 5, dans lequel ladite étape de dépose (5) est séquencée pour opérer des changements de section et/ou de matière première et/ou de géométrie du fil fondu en fonction des parties fabriquées de ladite pièce.

7. Machine de fabrication additive (10) par dépôt de fil fondu en couches successives sur un support d'impression (18) dans une chambre de fabrication (17) pour fabriquer une pièce tridimensionnelle, comprenant :
- une unité d'alimentation (11) d'une matière première,
- une unité de transformation (12) agencée pour changer l'état de la matière première en matière fondue, ladite unité de transformation (12) étant fixe, située à l'extérieur de ladite chambre de fabrication (17),
- un tuyau flexible et chauffant (15) agencé pour transporter la matière fondue à sa température et sa viscosité de transformation depuis ladite unité de transformation (12) fixe jusqu'à une unité de dépose (16) mobile,
- une unité de dépose (16) mobile située dans ladite chambre de fabrication (17) et comportant au moins une buse de dépose (24) agencée pour déposer ladite matière fondue sous la forme d'un fil fondu en couches successives sur ledit support d'impression (18) et selon une trajectoire prédéterminée jusqu'à l'obtention de la pièce à fabriquer.

8. Machine selon la revendication 7, **caractérisée en ce que** ladite unité de transformation (12) comporte au moins une extrudeuse à vis.

9. Machine selon la revendication 7, **caractérisée en ce qu'**elle comporte un dispositif de régulation (13) disposé en aval de ladite unité de transformation (12), entre ladite unité de transformation (12) et ledit tuyau flexible chauffant (15), ou préférentiellement entre ledit tuyau flexible chauffant (15) et ladite unité de dépose (16), et agencé pour réguler le débit et la pression de ladite matière fondue en sortie de l'unité de transformation (12), ou préférentiellement à l'entrée de l'unité de dépose (16).

10. Machine selon l'une quelconque des revendications 7 à 9, **caractérisée en ce que** ledit tuyau flexible chauffant (15) est couplé à au moins une résistance électrique, disposée autour du tuyau et agencée pour atteindre et stabiliser une température de consigne adaptée à la matière fondue transportée.

11. Machine selon l'une quelconque des revendications 7 à 10, **caractérisée en ce que** ladite unité de dépose (16) comporte un bloc chaud (20) pourvu d'un orifice d'entrée (22) raccordé en aval dudit tuyau flexible chauffant (15), et un disque rotatif (25) comportant au moins deux buses de dépose (24) de sections différentes, décalées angulairement, et **en ce que** le disque rotatif (25) est disposé en aval dudit bloc chaud (20) et agencé pour aligner séquentiellement une buse de dépose (24) dite active, avec un orifice de sortie (23) dudit bloc chaud (20) et autoriser la sortie du fil fondu.

12. Machine selon la revendication 11, **caractérisée en ce que** ladite unité de dépose (16) est inclinée par rapport à la verticale pour présenter la buse de dépose (24) active au plus près du support d'impression (18) ou de la pièce à fabriquer, et de dégager la ou les autres buses de dépose (24) qui sont en attente.

13. Machine selon l'une quelconque des revendications 11 et 12, **caractérisée en ce que** les buses de dépose (24) sont positionnées sur ledit disque rotatif (25) de sorte qu'en position de travail, l'axe (C) de la buse de dépose (24) qui est active est confondu avec une verticale.

14. Machine selon l'une quelconque des revendications 11 à 13, **caractérisée en ce que** ledit bloc chaud (20) et ledit disque rotatif (25) sont couplés par un contact surfacique sous pression, et **en ce que** ledit disque rotatif (25) forme un commutateur pour séquentiellement ouvrir le bloc chaud (20) lorsqu'une buse de dépose (24) est alignée avec son orifice de sortie (23) et fermer le bloc chaud (20) lorsque son orifice de sortie (23) est situé entre deux buses de dépose (24).

15. Machine selon l'une quelconque des revendications 11 à 14, **caractérisée en ce que** ledit bloc chaud (20) est monté dans un bloc support (26) fixe, et est assujetti par des organes de rappel (28, 29) en direction dudit disque rotatif (25) autorisant le déplacement angulaire dudit disque rotatif (25) par rapport audit bloc chaud (20) lors d'un changement séquentiel de la buse de dépose (24) active.

16. Machine selon l'une quelconque des revendications 11 à 15, **caractérisée en ce que** lesdites au moins deux buses de dépose (24) du disque rotatif (25) sont alimentées avec des matières premières différentes, et **en ce qu'**au moins ladite unité d'alimentation (11), ladite unité de transformation (12) et ledit tuyau flexible chauffant (15) sont dupliqués pour alimenter ladite unité de dépose (16) avec lesdites matières premières différentes.

17. Machine selon l'une quelconque des revendications 11 à 16, **caractérisée en ce que** ledit bloc chaud (20) comporte un obturateur (38) intérieur agencé pour séquentiellement ouvrir et fermer ledit orifice de sortie (23).

## Patentansprüche

1. Verfahren zur additiven Fertigung durch Auftrag von geschmolzenem Draht in aufeinanderfolgenden Schichten auf einen Druckträger (18) in einer Fertigungskammer (17), um ein dreidimensionales Werkstück herzustellen, das folgende Schritte umfasst:
- einen Schritt der Zuführung (1) von mindestens einem Rohstoff,
- einen Schritt der Umwandlung (2) des Rohmaterials in geschmolzenes Material in einer stationären Verarbeitungseinheit (12), die sich außerhalb der Fertigungskammer (17) befindet,
- einen Schritt des Transports (4) des geschmolzenen Materials bei seiner Verarbeitungstemperatur und -viskosität in einem flexiblen Heizschlauch (15) von der stationären Verarbeitungseinheit (12) zu einer beweglichen Auftragseinheit (16), die sich in der Fertigungskammer (17) befindet, und
- einen Schritt des Auftrags (5) des geschmolzenen Materials in Form eines geschmolzenen Fadens in aufeinanderfolgenden Schichten auf dem Druckträger (18) durch die bewegliche Auftragseinheit (16) bis zum Erhalt des herzustellenden Werkstücks.

2. Verfahren nach Anspruch 1, wobei der Schritt des Auftrags (5) darin besteht, den Querschnitt des geschmolzenen Drahts während der Herstellung des Werkstücks zu ändern und die Druckgeschwindigkeit automatisch und sofort an die geforderte Druckgenauigkeit in Abhängigkeit von den hergestellten Teilen des Werkstücks anzupassen.

3. Verfahren nach einem der Ansprüche 1 oder 2, wobei der Schritt des Auftrags (5) darin besteht, einen großen Abschnitt aus geschmolzenem Draht auszuwählen, der mit einem hohen Druckdurchsatz und einer geringen Druckgenauigkeit abgelegt wird, um den Kern des herzustellenden Werkstücks zu füllen, und einen kleinen Abschnitt aus geschmolzenem Draht auszuwählen, der mit einem geringen Druckdurchssatz und einer hohen Druckgenauigkeit abgelegt wird, um Konturen des herzustellenden Werkstücks zu bilden.

4. Verfahren nach einem der Ansprüche 1 und 3, wobei der Schritt des Auftrags (5) darin besteht, das Rohmaterial des geschmolzenen Drahts während der Herstellung des Werkstücks zu ändern, um das Rohmaterial des geschmolzenen Drahts automatisch und sofort an die hergestellten Teile des Werkstücks anzupassen.

5. Verfahren nach einem der Ansprüche 1 und 4, wobei der Schritt des Auftrags (5) darin besteht, die Geometrie des geschmolzenen Drahtes während der Herstellung des Werkstücks zu ändern, um die Geometrie des geschmolzenen Drahtes automatisch und sofort an die hergestellten Teile des Werkstücks anzupassen.

6. Verfahren nach einem der Ansprüche 1 und 5, wobei der Schritt des Auftrags (5) sequenziert wird, um Änderungen des Querschnitts und/oder des Rohmaterials und/oder der Geometrie des geschmolzenen Drahts entsprechend den hergestellten Teilen des Werkstücks vorzunehmen.

7. Additive Fertigungsmaschine (10), bei der geschmolzener Draht in aufeinanderfolgenden Schichten auf einen Druckträger (18) in einer Fertigungskammer (17) aufgetragen wird, um ein dreidimensionales Werkstück herzustellen, die Folgendes umfasst:
- eine Zuführungseinheit (11) für ein Rohmaterial,
- eine Verarbeitungseinheit (12), die angeordnet ist, um den Zustand des Rohmaterials in geschmolzenes Material zu ändern, wobei die Verarbeitungseinheit (12) feststehend ist und sich außerhalb der Herstellungskammer (17) befindet,
- einen flexiblen und Heizschlauch (15), der so angeordnet ist, dass er geschmolzenes Material mit seiner Verarbeitungstemperatur und -viskosität von der stationären Verarbeitungseinheit (12) zu einer beweglichen Auftragseinheit (16) transportiert,
- eine bewegliche Auftragseinheit (16), die sich in der Herstellungskammer (17) befindet und mindestens eine Auftragsdüse (24) aufweist, die so angeordnet ist, dass sie das geschmolzene Material in Form eines geschmolzenen Fadens in aufeinanderfolgenden Schichten auf den Druckträger (18) und in einer vorbestimmten Bahn aufträgt, bis man das herzustellende Werkstück erhält.

8. Maschine nach Anspruch 7, **dadurch gekennzeichnet, dass** die Verarbeitungseinheit (12) mindestens einen Schneckenextruder umfasst.

9. Maschine nach Anspruch 7, **dadurch gekennzeichnet, dass** sie eine Reguliervorrichtung (13) umfasst, die der Verarbeitungseinheit (12) nachgelagert zwischen der Verarbeitungseinheit (12) und dem Heizschlauch (15) oder vorzugsweise zwischen dem Heizschlauch (15) und der Auftragseinheit (16) angeordnet ist und so beschaffen ist, dass sie den Durchsatz und den Druck des geschmolzenen Materials am Ausgang der Verarbeitungseinheit (12) oder vorzugsweise am Eingang der Auftragseinheit (16) reguliert.

10. Maschine nach einem der Ansprüche 7 bis 9, **dadurch gekennzeichnet, dass** der flexible Heizschlauch (15) mit mindestens einem elektrischen Widerstand gekoppelt ist, der um den Schlauch herum angeordnet ist und so beschaffen ist, dass er eine Solltemperatur erreicht und stabilisiert, die an die transportierte Schmelze angepasst ist.

11. Maschine nach einem der Ansprüche 7 bis 10, **dadurch gekennzeichnet, dass** die Auftragseinheit (16) einen Heißblock (20) mit einer Einlassöffnung (22) umfasst, die nach dem Heizschlauch (15) angeschlossen ist, und eine Drehscheibe (25) mit mindestens zwei Auftragsdüsen (24) mit unterschiedlichen Querschnitten aufweist, die winklig versetzt angeordnet sind, und dass die Drehscheibe (25) nach dem Heißblock (20) angeordnet und so beschaffen ist, dass sie eine sogenannte aktive Auftragsdüse (24) mit einer Austrittsöffnung (23) des Heißblocks (20) sequentiell ausrichtet und den Austritt des geschmolzenen Drahts zulässt.

12. Maschine nach einem der Ansprüche 11, **dadurch gekennzeichnet, dass** die Auftragseinheit (16) gegenüber der Vertikalen geneigt ist, um die aktive Auftragsdüse (24) so nah wie möglich am Druckträger (18) oder dem herzustellenden Werkstück zu präsentieren und die andere(n) Auftragsdüse(n) (24), die in Wartestellung sind, freizugeben.

13. Maschine nach einem der Ansprüche 11 und 12, **dadurch gekennzeichnet, dass** die Auftragsdüsen (24) auf der Drehscheibe (25) so positioniert sind, dass die Achse (C) der Auftragsdüse (24), die aktiv ist, in der Arbeitsposition mit einer Vertikalen zusammenfällt.

14. Maschine nach einem der Ansprüche 11 bis 13, **dadurch gekennzeichnet, dass** der Heißblock (20) und die Drehscheibe (25) durch einen flächigen Druckkontakt gekoppelt sind und dass die Drehscheibe (25) einen Schalter bildet, um den Heißblock (20) sequentiell zu öffnen, wenn eine Auftragsdüse (24) mit ihrer Austrittsöffnung (23) ausgerichtet ist, und den Heißblock (20) zu schließen, wenn sich seine Austrittsöffnung (23) zwischen zwei Auftragsdüsen (24) befindet.

15. Maschine nach einem der Ansprüche 11 bis 14, **dadurch gekennzeichnet, dass** der Heißblock (20) in einem festen Trägerblock (26) montiert ist und durch Rückstellorgane (28, 29) in Richtung der Drehscheibe (25) gesichert ist, die die Winkelverschiebung der Drehscheibe (25) in Bezug auf den Heißblock (20) bei einem sequentiellen Wechsel der aktiven Auftragsdüse (24) zulassen.

16. Maschine nach einem der Ansprüche 11 bis 15, **dadurch gekennzeichnet, dass** die mindestens zwei Auftragsdüsen (24) der rotierenden Scheibe (25) mit unterschiedlichen Rohmaterialien versorgt werden, und dass mindestens die Zuführungseinheit (11), die Verarbeitungseinheit (12) und der Heizschlauch (15) dupliziert werden, um die Auftragseinheit (16) mit den unterschiedlichen Rohmaterialien zu versorgen.

17. Maschine nach einem der Ansprüche 11 bis 16, **dadurch gekennzeichnet, dass** der Heißblock (20) einen inneren Verschluss (38) aufweist, der so angeordnet ist, dass er die Auslassöffnung (23) nacheinander öffnet und schließt.

## Claims

1. An additive manufacturing method by deposition of molten wire in successive layers on a printing support (18) in a manufacturing chamber (17) to manufacture a three-dimensional part, comprising the following steps:
- a feeding step (1) of at least one raw material,
- a step (2) of processing the raw material into molten material in a fixed processing unit (12) located outside said manufacturing chamber (17),
- a step (4) of conveying the molten material at its processing temperature and viscosity in a flexible heating tube (15) from said fixed processing unit (12) to a mobile deposition unit (16) located in said manufacturing chamber (17), and
- a step of depositing (5) said molten material in the form of a molten wire in successive layers on said printing support (18) by said mobile deposition unit (16) until the part to be manufactured is obtained.

2. The method according to claim 1, in which said deposition step (5) consists of modifying the section of the molten wire during the manufacture of said part, and automatically and instantaneously adapting the printing rate to the required printing precision as a function of the manufactured parts of said part.

3. The method according to any of claims 1 and 2, wherein said deposition step (5) consists of selecting a large section of molten wire deposited with a high printing rate and low printing precision to fill the core of said part to be manufactured and selecting a small section of molten wire deposited with a low printing rate and high printing precision to form contours of said part to be manufactured.

4. The method according to any of claims 1 to 3, wherein said deposition step (5) consists of changing the molten wire raw material during the manufacture of said part, to adapt the molten wire raw material automatically and instantaneously in accordance with the manufactured parts of said part.

5. The method according to any of claims 1 to 4, wherein said deposition step (5) consists of changing the molten wire geometry during the manufacture of said part, to automatically and instantaneously adapt the molten wire geometry in accordance with the manufactured parts of said part.

6. The method according to any of claims 1 to 5, wherein said deposition step (5) is sequenced to effect changes in section and/or raw material and/or molten wire geometry in accordance with the manufactured parts of said part.

7. An additive manufacturing machine (10) for depositing molten wire in successive layers on a printing support (18) in a manufacturing chamber (17) to manufacture a three-dimensional part, comprising:
- a feed unit (11) for a raw material,
- a processing unit (12) designed to change the state of the raw material into molten material, said processing unit (12) being fixed and located outside said manufacturing chamber (17),
- a flexible heating tube (15) designed to convey molten material at its processing temperature and viscosity from said fixed processing unit (12) to a mobile deposition unit (16),
- a mobile deposition unit (16) located in said manufacturing chamber (17) and comprising at least one deposition nozzle (24) designed to deposit said molten material in the form of a molten wire in successive layers on said printing support (18) and along a predetermined trajectory until the part to be manufactured is obtained.

8. The machine according to claim 7, **characterized in that** said processing unit (12) comprises at least one screw extruder.

9. The machine according to claim 7, **characterized in that** it comprises a regulating device (13) located downstream of said processing unit (12), between said processing unit (12) and said flexible heating tube (15), or preferably between said flexible heating tube (15) and said deposition unit (16), and designed to regulate the flow rate and pressure of said molten material at the outlet of the processing unit (12), or preferably at the inlet of the deposition unit (16).

10. The machine according to any of claims 7 to 9, **characterized in that** said flexible heating tube (15) is coupled to at least one electrical resistor, positioned around the tube, and designed to reach and stabilize a setpoint temperature adapted to the molten material being conveyed.

11. The machine according to any of claims 7 to 10, **characterized in that** said deposition unit (16) comprises a hot block (20) provided with an inlet orifice (22) connected downstream of said flexible heating tube (15), and a rotary disk (25) comprising at least two deposition nozzles (24) of different cross-sections, angularly offset, and **in that** the rotary disk (25) is located downstream of said hot block (20) and designed to sequentially align an active deposition nozzle (24) with an outlet orifice (23) of said hot block (20) and allow the molten wire to exit.

12. The machine according to claim 11, **characterized in that** said deposition unit (16) is inclined with respect to the vertical line to bring the active deposition nozzle (24) as close as possible to the print support (18) or the part to be manufactured, and to clear the other deposition nozzle(s) (24) which are on standby.

13. The machine according to any of claims 11 and 12, **characterized in that** the deposition nozzles (24) are positioned on said rotary disk (25) so that, in the working position, the axis (C) of the active deposition nozzle (24) is aligned with a vertical line.

14. The machine according to any of claims 11 to 13, **characterized in that** said hot block (20) and said rotary disk (25) are coupled by surface contact under pressure, and **in that** said rotary disk (25) forms a switch for sequentially opening the hot block (20) when a deposition nozzle (24) is aligned with its outlet orifice (23) and closing the hot block (20) when its outlet orifice (23) is located between two deposition nozzles (24).

15. Machine according to any of claims 11 to 14, **characterized in that** said hot block (20) is mounted in a fixed support block (26), and is secured by return members (28, 29) in the direction of said rotary disk (25) allowing angular displacement of said rotary disk (25) with respect to said hot block (20) during a sequential changeover of the active deposition nozzle (24).

16. The machine according to any of claims 11 to 15, **characterized in that** said at least two deposition nozzles (24) of the rotary disk (25) are fed with different raw materials, and **in that** at least said feed unit (11), said processing unit (12), and said flexible heating tube (15) are duplicated to feed said deposition unit (16) with said different raw materials.

17. The machine according to any of claims 11 to 16, **characterized in that** said hot block (20) comprises an internal shutter (38) designed to sequentially open and close said outlet orifice (23).
